# EUROPEAN PATENT APPLICATION

(11) **EP 2 889 817 A1**
(43) Date of publication of application: **01.07.2015**
(21) Application number: 14004273.0
(22) Date of filing: 18.12.2014
(51) Int. Cl.: G06Q 10/06

(54) **Dataprocess system and method for optimal administration, management and control of resources, computer program product for operating said system and method, and communication device to display information**

(30) Priority: 18.12.2013 EE 201300041; 17.12.2014 EE 201400043
(71) Applicant: MxM Products Eesti OU, 12615 Tallinn (EE)
(72) Inventor: Sedoseva, Maritana, 12615 Tallinn (EE)
(74) Representative: Koitel, Raivo

(57) **Abstract**

The invention relates to a data process system and method for optimal administration, management and control of resources and the invention is based on the balanced scorecard together with the optimizing method and integrated utility (efficiency) function (UF) system. The system comprises technical programmable modules, database server, connection of resources information systems, connection of hardware devices, internet connection, technical main module comprising technical control and working panel, computer program product and technical application means, technical information terminal, peripheral communication device, balanced scorecard and utility function development tool, technical working panel modules where utility and efficiency main modules comprising application complex indicators and complex measuring instruments (KPI₁ and KPI₂) are integrate

## Description

### Technical field

This invention relates to a data process system and method, which is adapted to the optimum administration, management and control of resources, and a computer program product (e-SMUFP), which is implemented to execute the management system optimisation method that helps to ensure purposeful planning, use and controlling of the resources of an organisation. The invention also treats an integrated communication device for displaying the data received from resources. The system comprises both data systems and technical elements as well as optimisation processes, and gives the possibility to process, manage, control and verify data that is arriving from different modules.

### Prior art

Known are various resource administration and management systems and methods that are used for the management and administration of various resources. Common are systems, which contain elements of a balanced scorecard (BSC) or methods, which involve gathering and processing of information, where the resources are managed either by means of computer program products or other programmable systems.

Known are systems, which contain different types of indicators by means of which resources are managed and information is collected. Systems can be connected to server computers, verification systems or to other equipment..

Known is the invention published in the patent application US 2011295656, Oracle International Corporation (published 01.12.2011), which contains a scorecard application with an integrated key performance indicator (KPI), where the scorecard application is applied to conduct management and administration strategies through information web server, where key performance indicator elements are used for concentrating and processing information. The main deficiency of the invention is in the specific field of application of the solution, analysis of only limited data and information and in the lack of possibility for complex management of resources.

Known is the invention published in patent application WO 2004114177, Show Business Software Ltd., Fourman Clive Morel (published 18.08.2005), which treats an information gathering system, which is executed on the platform of a balanced scorecard. The system contains elements of a search engine, giving the possibility to gather and process information and data in different web portals, using meta data through which the system has been implemented to execute the strategies of the organisation and processing of information, The main deficiency of this invention is also in the lack of possibility for complex administration and management of resources and limited processing of information and data.

Known is the invention published in patent US 7546264, Charnley James Allen, Wall Street Advisers, Inc. (published 09.06.2009), which is used for organising investment activities and processes and which contains a theoretical mathematical modelling method. The deficiency of this invention is in the lack of diverse and broad possibilities for application and in targeting it to a limited group of specific users.

Known is the invention published in patent US 2010121776, Strenger Peter, (published 13.05.2010), applicable to gathering and processing of information and data, and containing a supplementary system and method for the evaluation of information. Operations are executed, using a web server and key performance indicators (KPI), while the main deficiency of the invention is in the lack of possibility for a complex administration and management of resources and limited choice for administration of existing parameters.

Known is the invention published in patent EE 05523, ZeroGroup Holding OÜ, (published 15.02.2012), which contains a method and a system for central administration, management and combining of various resources, including resources of incompatible standards. The system contains information systems and hardware and is implemented for real-time collection, processing and forwarding of information. The main deficiency of this invention is the specific field of application of the solution and the lack of possibilities for complex administration and management of resources.

Known is the invention published in patent application EP 2031541, LG Electronics, Inc., (published 04.03.2009), which relates to a real estate management system and a control method for the management system. The system contains various technical elements, which are connected to a communication network, while user authentication is also used. The main drawback of this invention is that the solution belongs in a specific field of application and lacks the opportunities for optimum and complex resource administration and management.

Known is the invention published in patent application US 2009240510, Hopkins L.B., Griffith C., et al., (published 24.09.2009), which is used for supporting various IT systems and improving the delivery of specific information elements. The system contains a balanced scorecard platform and a control service method. The main drawback of the invention is that it is targeted only at supporting and administrating specific network resources, also its use only in information systems equipped with communication networks.

Known is the invention published in patent application CN 101887545, Hunan Company of China Nat Tobacco Corp, (published 17.11.2010), which relates to a strategic performance management system, using a balanced scorecard platform. The system is implemented to execute management and administration strategies of an organisation, and to process relevant information and data therein. The system comprises various modules and is applied to execute the processing and analysis of various data and information. Data is analysed, using the method of key performance indicators (KPI). The main drawback of the invention is in its lack of opportunity for optimum and complex administration and management of resources.

Known is the invention published in patent application EP 2037400, Accenture Global Services GmbH, (published 18.03.2009), which is used for searching and collecting various types of information and contains a balanced scorecard platform, including tools of an accounting module.

Operations are carried out by means of software installed in a computer and linked to various equipment, using the elements of key performance indicators (KPI). The main drawback of this invention is in its lack of opportunity for optimum and complex administration and management of resources, and limitations in administrating the existing parameters.

The drawbacks of the above-named known systems or methods are:
- limitations in the use of systems (specific elements of systems);
- limitations in the administration of resources (specific defined areas or elements);
- only one method or system is applied (balanced scorecard or key performance indicators);
- missing or limited opportunity to use and compare controlling and measuring systems,

The PhD thesis of M.Sedysheva: 'Strategic Management and Optimization System of Military Resources (Based on the Example of the Estonian Defence Forces)', defended on 18. 05. 2012., Tallinn, EBS (http://www.ebs.ee/ee/teadustoo-2/publikatsioonid/ebs-doktori/) contains a solution, which is the closest to this invention.

This invention is targeted at a system and method for optimal administration, management and control of resources, which involves complex execution of operations and is based on the improvement and optimisation of the integrated complex use of balanced scorecard (BSC) and utility (efficiency) function (UF).

In comparison with the inventions of the PhD thesis and those known from the prior art, the invention applies a comprehensive technical platform of a data process system with integral execution of complex operations and an advanced system of complex meters, which are implemented to measure results as well as to perform the activities and operations required for the achievement of the results. The data process system and method presented in the invention improve the administration, management and control of resources.

The invention comprises unique and combined complex meters together with a computer program product (e-SMUFP) and technical platform algorithms KPI₁ and KPI₂. The new computer program product (e-SMUFP) of the invention, containing algorithm program tools, is implemented to select relevant and reliable performance and implementation indicators (KPI₁ and KPI₂), when the program is started.

For the complex administration and management of resources, the invention has also developed new parts for the computer program product (e-SMUFP) as well as an information technology device (communication device), which gives the possibility to download, display and present in real time various statistical data on the basis of information received from the computer program product (e-SMUFP). The information technology device is a technical means of communication and part of the computer program product (e-SMUFP), where special technical devices have been applied through which the final data and information arriving from the information terminal are aggregated. The information can be in any digital format.

### Detailed description of the invention

The data process system and method of the invention constitute a structured technical system, wherein the respective data process is organised and operations are executed. The data process system contains structured information technology stations, providing the possibility to process, manage and control information arriving from various modules, and to execute and copy all the activities occurring in the actual work process. The data process system is adapted to deliver and allocate efficient functioning and processing of information in a technical system of an organisation, involving all its resources.

This invention is a data process system and method for the optimal management, administration and control of resources, and it is based on the improvement and optimisation of the integrated complex utilisation of balanced scorecard (BSC) and utility (efficiency) function (UF). The invention also includes a computer program product (e-SMUFP) that is applied to execute the optimisation method of the data process system, and an information technology device (communication device) that is part of the system and is used for displaying the information.

The implemented optimal and complex system and method for resource management and data process is based on the technical platform of balanced scorecard (BSC) together with the algorithm of integrated utility (efficiency) function (UF). The system comprises both information systems and technical main stations as well as hardware (or connection with equipment) that give the possibility to collect, process and deliver (display) information from various data sources faster and more efficiently.

The data process system and method presented in the invention improves the administration, management and controlling of resources. A control panel and the computer program product (e-SMUFP) interact with the technical main module, forming a hardware and software based information terminal of the information system and data set, which contains a comprehensive technical platform that is integrated with the technical working panel modules and is used for aggregating and processing the information and data. The information terminal is part of the control panel, containing unique and combined complex meters together with the computer program product (e-SMUFP) and the technical platform algorithms KPI₁ and KPI₂. The control panel is used for carrying out the processes and operations applied in the working panel; when the panel is connected to other devices, it gives the possibility to process information contained in received data by displaying also various statistical data in the information terminal in real time. In the operations and processing module of the working panel, a system of process and meters is implemented by means of a universal measuring system adaptable to organisations, to visualise which activities are necessary to process the data contained in the information and to achieve the respective results.

Complex meters are used to select what is important, while different fields are mutually combined in a balanced way by means of complex meters (main models KPI₁ and KPI₂), which can be monitored, measured and managed and give the possibility to develop all specific important functions of the organisation, management and administrative procedures, and give the possibility to increase the speed of information and efficiency of data processing.

A part of the computer program product (e-SMUFP) - an information technology device (communication device) is intended for joint administration, management and displaying of statistical data. The technical device is a tool, where special technical means (elements) have been implemented for aggregating the final data and information transmitted from the information terminal.

Information can be in any digital format, while files are downloaded through a USB cable or communication network.

The complex meter of the system is a quantitative or qualitative parameter which gives the possibility to measure or which could be used for comparison purposes, while a target value has been defined for each complex meter.

Resources may be resources of diverse type, such as people, assets, information systems, data or other. The invention helps both to define variables in the management planning process as well as to plan the purposeful division of these variables and expenses in the organisation.

Combining balance and utility in the improved scorecard is implemented in the organisation as a whole and in each individual planning, wherein the following is included:
- a computer program product (e-SMUFP, application software) adaptable to each organisation;
- algorithms (KPI1 and KPI2) of application and key performance indicators, which are unique to each organisation and help to optimise expenses and to generate plans, analyses;
- a control system and information terminal programmed in the technical Main Module;
- a complex measuring system and the calculation and assigning of KPI₁ and KPI₂ algorithms adaptable to the organisation;
- general solution of the communication tool and the respective user interface;
- mutually compatible computer program product (e-SMUFP) and preprogrammed information technology device (communication device).

### List of figures

Figure 1 shows the general diagram of the optimal administration, management and control of data process system resources;
Figure 2 shows the components of the computer program product (e-SMUFP) for the administration, management and control of resources;
Figure 3 shows the technical model (UF and KPI₁ models) of the planning and decision-making process in the planning of resources, being the data product of the method in the application of the application indicator model;
Figure 4 shows the control method of the technical model (UF and KPI₁ models) of the planning and decision-making process in the planning of resources;
Figure 5 shows the general model of the measuring system, being the data product of the method in the implementation of the key performance indicator (KPI₂).

### Embodiments of the invention

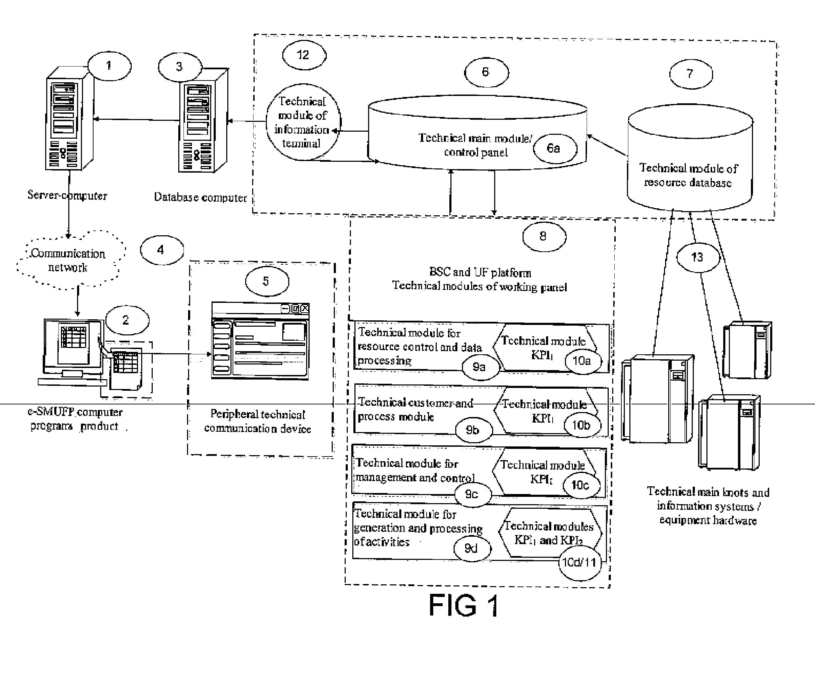

Below are the embodiments of the invention, in which references to invention components correspond to Figures 1 to 5.

The presented system for the optimal management, administration and control of resources comprises (Figure 1):
- server computer 1;
- database computer 3 with databases that contain sub-databases and master databases;
- technical main stations 13 for collecting resource data;
- computer program product 2 in the data process equipment (e-SMUFP),
- technical main modules (including control panel and working panel) 6 and 8 of the computer program product 2 e-SMUFP;
- technical information panel 12 of the control panel, with a unique solution and computer program product, giving the possibility to display and process as well as compare graphically in real time the information received from working panel modules;
- working panel 8 contains technical program modules, which are based on the BSC measuring system principle;
- information technology device 5 (communication device) for presenting, distributing or displaying the final results of the information terminal.

The method for the administration, management and controlling of resources in a data process system comprises:
- mathematic modelling in integrated technical platform, decision making process and control (utility function (UF));
- implementation of advanced application and result algorithms (KPI₁ and KPI₂) of the mathematical main model developed in the integrated technical platform;
- programming and conceptualisation of the technical device (communication device) and development of the user interface framework.

The server computer (see Figure 1) 1 is where user rights are assigned and where the computer program product (e-SMUFP)2 adaptable to each client is installed to receive information from database(s) 3. The computer program product is activated and its services are used through computers connected to communication network 4 (e.g. Internet).

For the functioning of the system and joint administration and management of statistical data, the computer program product (e-SMUFP) is provided with a part that is the information technology device 5 (communication device) for the delivery, distribution or displaying of information.

The peripheral information technology device 5 (communication device) comprises various technical elements (e.g. LCD screen, battery, memory, speakers, USB cable) and a universal programmable logic system and various technical applications that give the possibility to load through the USB cable connected to a computer the information of the device information terminal and to present data in different digital formats and technical forms. The peripheral technical device may have different solutions, including an LCD with different sizes (incl. also a touch screen) and can be programmed with various algorithms and application functions. The peripheral technical device for displaying the data eliminates the need for supplementary peripheral auxiliary devices and for using the Internet.

The computer program product (e-SMUFP) 2 is divided into large technical modules: the main module 6 (see Figure 1), which comprises control panel 6a and working panel 8 and technical module 7 for the administration of the resource database, where information is received through combined hardware and other equipment and the resource data is collected on the basis of this information. The technical modules 8 of the working panel are functional graphical technical platforms, which are based on the principles and methods of the BSC and UF model, containing the differentiated behaviour of information and data collection and data process management and administration resources.

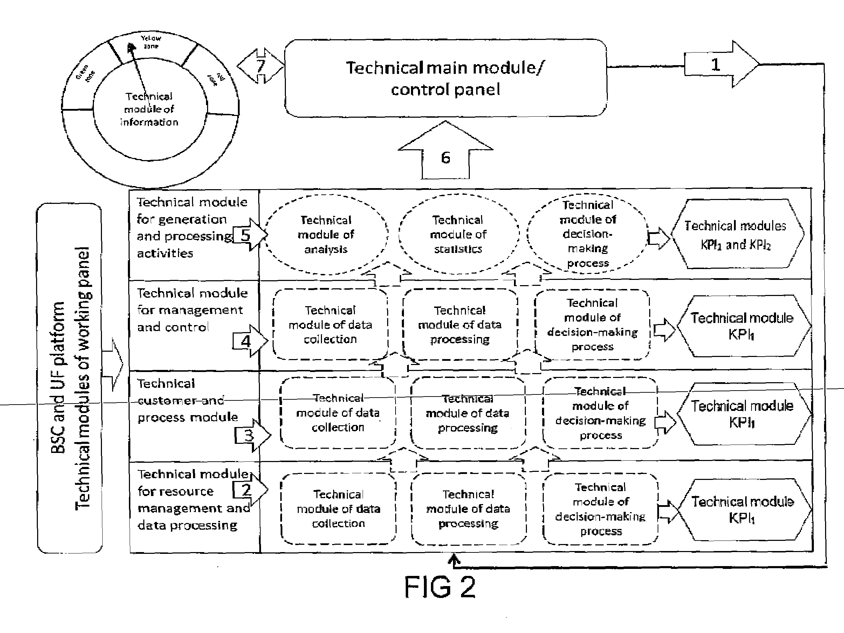

The operations of data process administration and management are executed with the help of four technical modules 9a, 9b, 9c, 9d, where the received information is collected, processed and executed as applicable, according to a clear technically fixed structure and hierarchically structured system and a strategic resource management algorithm (see Figure 2).

In the resource management system all modules and all functions can be substituted or combined as needed, originating from the nature of the organisation and assigned tasks.

The process of control panel 6a and working panel 8 comprises the following steps (see Figure 2):
- in the database module of resources 7, the information and data about resources from data received from devices 13, which are connected to other devices, are gathered into the technical module 7 of resource database (see Figure 1);
- the required main information and data are selected and defined in the control panel system and then sent to the working panel (step 1);
- working panel 8 contains four technical modules (BSC and UF platform):
   technical module for resource control and data processing *(Resources Module)* 9a; technical customer module (*Customer and Process Module*) 9b; technical module for management and control (*Management and*
   *Control Module*) 9c; technical module for generation and processing of activities (*Innovation and Development Module*) 9d;
- in each module information and data are collected, entered and processed according to the process and the data saved in the control panel (see Figure 2, steps 2, 3, 4, 5), where optimal and suitable application indicators are selected, cause and effect chains are determined from complex meters, a target value is set for each complex meter, and measuring standards are defined (UF sub-model);
- collected information is sent to control panel 6a for the adjustment and analysis of main data (see Figure 2, step 6);
- for the measuring of performance in modules 9a-9d of working panel 8, a mathematical modelling system has been integrated, where the measurable critical success factors, suitable complex meters and application and performance indicators (KPI₁ and KPI₂) are defined, and cause and effect chains are determined on the basis of the complex meters, a target value is assigned to each complex meter, and measuring standards are specified (UF and TI sub-models).

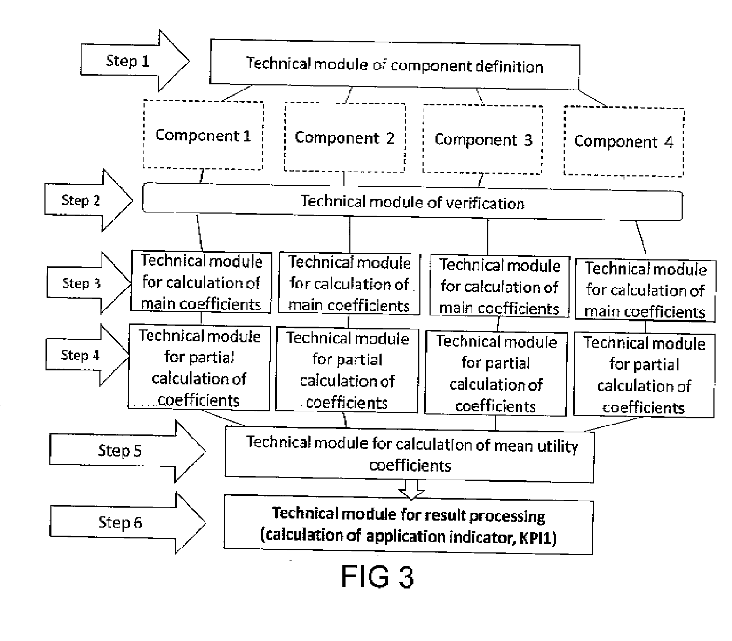

Resources are managed, utilising a decision-making process and controlling method (see Figure 3), where the performance of information and data is measured (calculation of key performance indicator, KPI₁).

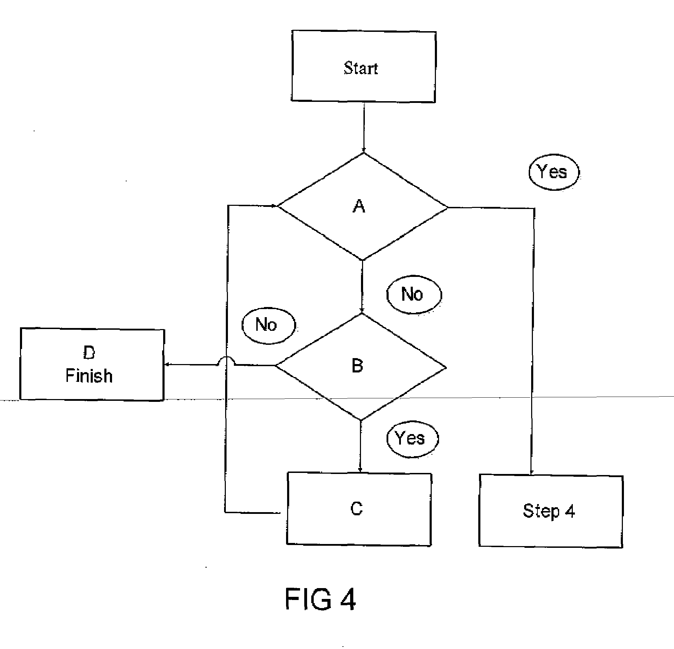

The main principle of decision-making process (*strategic map*) and the method of using the main model for the calculation of the key performance indicator (KPI₁) comprises the following steps (see Figure 3):
required components are selected and measuring mechanisms are defined in the technical module for defining the components (step 1);
   - the controlling step (step 2) is applied in the technical module of controlling, which is intended to control an application related to required components or measuring mechanisms, or the rights to authorise use of specific data (see Figure 4):
      step A the assessment criteria for checking the results are defined in the technical control module. The information received from the technical module for component specification is processed pursuant to a clear technically fixed structure and assessment algorithm. The measures and analysis of the information is settled and it is controlled, if the selected specific components would be feasible in an actual process;
         results of control: yes, step 3 follows;
         results of control: no, step B follows;
      step B the measures and analysis of the information is settled and it is controlled, if it is possible to change the component specification in an actual process;
         results of control: yes, step C follows;
         results of control: no, step D follows;
      step C the definitions of components are changed in the technical module of control, where the next step is step A;
      step D control of results is finished;
         - in the technical module for the calculation of main coefficients the numbers of main criteria per each component are processed by means of mathematical data processing (UF) (step 3);
         - in the technical module for the calculation of sub-coefficients the numbers of sub-criteria per each component are processed by means of mathematical data processing (UF) (step 4);
         - in the technical module for the calculation of mean utility coefficients, the values of mean utility coefficients are processed (step 5);
         - in the technical module for the processing of results the matrix of results is processed and decisions are made (step 6).

The algorithm of utility function (UF) is an integral part of each BSC module, while the main model of modelling is applied separately in compiling different application indicators (KPI₁) and in the execution of operations.

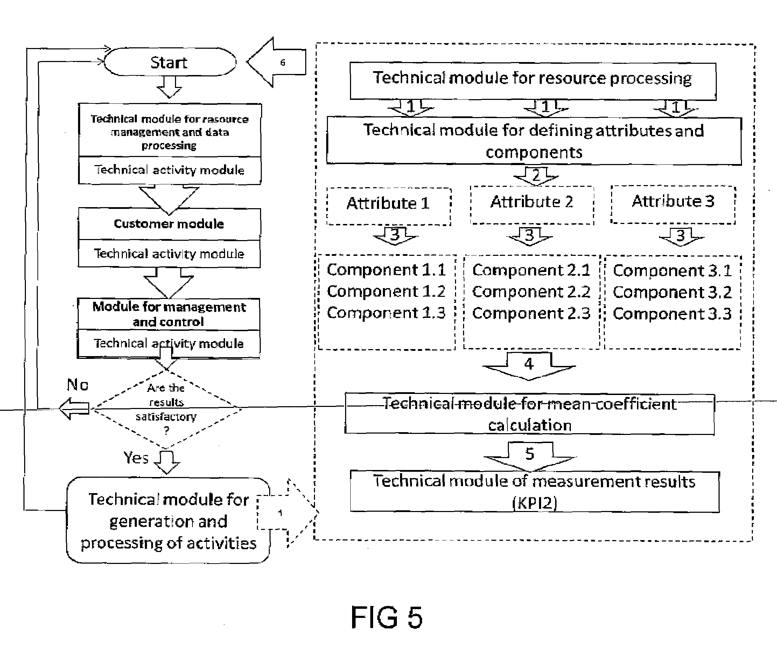

The invention applies a new component in the technical comprehensive platform of the data process system - a functional technical model for modelling the key performance indicator (see in Figure 1, 10a, 11), which is integrated in the technical module 9d for generation and processing of activities and is implemented for the purpose of executing activities and operations for measuring the final results and for the processes required for the achievement of the final results. The model for modelling the key performance indicator (KPI₂) (see Figure 5) and the method are based on ready main information or data for obtaining (such as in budgeting) the results (such as cost). The presented model has been developed with a possibility to enter correct initial data in the planning periods (using the starting, medium and long-term periods) and to select different components of the modelling model and to set norms (such as to calculate the total cost or sub-costs of strategic goals). The model (KPI₂) for modelling the performance indicator is used to select suitable relevant and reliable complex meters and indicators. The complex meters and indicators are used to measure e.g. price, value, costs; quality and quantity and time. The system enables the decision-makers to see the results in real-time and graphically, to change the data components and to show the effect on the achievement or planning of the goals of the organisation both in the scale of time and resources.

The model for modelling the performance indicator (such as a budgeting formula) is as follows (see Figure 5):
- originating from the data processed in three BSC technical modules, the information is sent to the technical module for generation and processing of activities in order to draw up the main data;
- required components are selected and attributes are calculated in the resource processing technical submodule of the technical module for generation and processing of activities (steps 1, 2, 3);
- values of mean coefficients are found in the technical module for the calculation of mean coefficients (step 4);
- performance indicators (KPI2) are found and the formulas of main data are programmed in the technical module of measuring results (step 5).

Originating from the main data of the working panel modules, the data elements of each process or activity are worded, which is determined by means of complex meters and application indicators characterising these components along with the respective target values and measures in the resource administration and management and planning implementation unit.

Below is an example of using a method corresponding to the invention in a data process system for the optimal administration, management and control of resources. Each customer is provided with individual username and password. A customer who applies the e-SMUFP computer program product in a system logs in at a respective portal through a communication network. At this the customer is identified and authenticated in the web server.

This is followed by implementing the e-SMUFP computer program product in the customer's system, enabling the customer to conduct various operations and collect and process information. A working process is implemented in the unit to compile and enter the main data, for which a menu of the main module (control panel) is used, where the required data and elements (such as the vision, strategic goals, planning) are defined and all essential working processes for the performance of required operations are identified.

Then these data are sent to the technical working panel. A BSC model is used to organise activities and operations, to collect and process information and data, originating from the main data stored in the control panel in which a platform together with the algorithm of utility function (UF) programmed for each module is used, where required information elements are formed and collected. Based on this collected information respective activities are automatized and decisions and processes are presented graphically on a monitor screen.

The process of the working panel includes the following steps (see Figure 2):
- based on the information and data of the technical control panel module, the required working information and data are drawn up and defined;
- meters and target values are assigned to each piece of information;
- measures and analysis are determined for the information;
- needs for information and data for the execution of activities are processed and supplemented.

Technical module for controlling resources and processing data (resource module):
- generation of information and data (such as budgeting and preparation of main financial plans, and generation, submitting propositions);
- processing of information and data, and execution of operations (such as providing a resource framework for developing and planning the plans of action);
- finding and using measuring elements and application indicators in the KPI₁ technical module.

Then the data and elements of the resource module are sent to the technical module of the customer.

The technical module of the customer:
- processing of information and data, and execution of operations (such as execution of plans of action and tasks; use of financial resources and control of results);
- finding and using the measuring elements and application indicators in the KPI₁ technical module.

Then the data and elements from the technical module of the customer are sent to the technical management and control module.

Technical management and control module:
- processing and generation of information and data, and execution of operations (such as analysis of the execution of activities and budget, and presenting graphically on a monitor screen, and control of results);
- finding and using measuring elements and application indicators in the KPI₁ technical module.

Then the data and elements of the technical module for management and control are sent to the technical module for generation and processing.

Technical module for the generation and processing of activities:
- processing and application of information and data, and execution of operations (such as correction of indicators and formation and differentiating preparation of the error detection process);
- automation of activities in the KPI₁ technical module (such as preparation and generation of decision-making process and control functions);
- generation of and preparation of model and information elements for the mathematical modelling in the KPI₁ technical module;
- developing and implementing application and performance indicators in the KPI₂ technical module.

The technical module for generation and processing of activities is a general functional module designed in the unit to support the processing of data of other modules; this is where the system and various processes are generated. In the application of the model for modelling the key performance indicator (KPI₂), the following process is completed (see Figure 5), wherein:
- originating from the results of data processing in other modules, the activities and operations for using the main data are determined in the module for generation and processing of activities;
- in the technical modules KPI₁ and KPI₂, complex meters as well as application and performance indicators are formed and defined;
- measuring standards are established in the technical modules KPI₁ and KPI₂;
- data are entered in the technical modules KPI₁ and KPI₂ for the differentiated application of mathematical modelling;
- the information entered and processed in the technical module for generation and processing of activities is saved and sent automatically to the buffer server of other modules of the working panel: technical module for resource control and data processing (*Resources Module*); customer module (*Customer and Process Module*); management and control module (*Management and Control Module*);
- information and data are processed and applied with the help of measuring elements and algorithms sent in the KPI₁ and KPI₂ technical modules.

Then the set of executed activities and information are sent back to the control panel for the correction and control of main data.

All activities and elements are sent through the server to the database of execution control, based on which the main data are translated in the server for the execution of the method in the system, and where the application of system resources is managed and controlled, while the benefits of the resource control system (resources module) are the following:
- is applied to generate and present a temporal framework and recommendations for the administration, management and control of organisation resources;
- increased efficiency and speed of data processing;
- increased efficiency and speed of operation commands;
- is applied to develop activities, planning and process of the organisation in the unit;
- is applied to execute the generation, modification and comparison of strategies in the unit in a continuous process;
- is applied to develop different fields of organisations of the unit into a uniform whole by means of cause and effect chains;
- is applied to develop more efficient budgeting and planning processes;
- is applied to manage and analyse different time periods in planning, .using the indicators of initial, medium and long term planning processes;
- is applied to generate and develop decisions related to the optimal allocation of resources, supporting the logical *processes* in these;
- besides monetary meters includes related non-monetary meters for the optimal administration, management and control of resources.

## Claims

1. A data process system for optimal administration, management and control of resources, comprising technical program modules, a database server, a web server, an internet connection, a technical connection with the information systems of resources, a connection of hardware devices, a technical platform of balanced scorecard, indicators (KPI₁ and KPI₂), key performance indicators, a peripheral technical device, **characterised in that** the system comprises information technology means, being the main module (6), which comprises a control panel (6a) and working panel (8), a technical module of resources database (7), a computer program product (2) and its application means, a technical information terminal (12), a processing device of scorecard and utility function (9), technical modules of the working panel (9a, 9b, 9c, 9d), while the main module (9) has two-way communication with the information terminal (12), with the technical module of the resources database (7) and a processing device of utility function (9) in which the control panel (6) and the main module (6a) have a mutual link with the database computer (3), the technical working panel (8) is linked with technical modules (9a, 9b, 9c, 9d), wherein an optimal main model of application and result indicator is integrated in the modules of the working panel, comprising complex application indicators and complex meters (10a, 10b, 10c, 10d, 11).

2. A system according to claim 1, **characterised in that** the computer program product (2) is implemented to execute main processes in the control panel (6) and working panel (8), which contains the main data and information of resources and entails collection of information and data and managing the data process.

3. A system according to claims 1 and 2, **characterised in that** the technical modules (9) of the working panel comprises the technical module for resource control and data processing (9a), the application indicator and complex meter of this module (10a), the technical customer and process module (9b), the application indicator and complex meter of this module (10b), the technical module for management and control (9c), the application indicator and complex meter of this module (10c), the technical module for generation and processing of activities (9d) and the application and performance indicator (10d) and complex meter (11) of this module.

4. A system according to claims 1 to 3, **characterised in that** it is applied to execute the administration, management and control of resources on the basis of the logical system (KPI₂) of the modelling model of the performance indicator, wherein:
- information is sent to the technical module for generation and processing of activities to compile main data, originated from the data processed in three BSC technical modules;
- technical module for generation and processing of activities has been provided with an interface with a technical submodule for the processing of resources, where again components and attributes required for calculation are defined;
- the technical module for the calculation of mean coefficients is implemented for the calculation of the mean values of coefficients;
- the technical module of measuring results is implemented for the calculation of the functional values of the main data of key performance indicators (KPI₂).

5. A system according to claims 1 to 4, **characterised in that** it comprises technical modules of complex application and performance indicators (KPI₁ and KPI₂) (10a, 10b, 10c, 10d, 11) for the calculation of the main model in the optimisation of costs and administration of resources.

6. A system according to claims 1 to 5, **characterised in that** it comprises technical modules of complex meters (10a, 10b, 10c, 10d, 11) for the calculation of cause and effect chains, while a target value and measuring standards (UF sub-model) are assigned to each complex meter.

7. A method for the implementation of optimal administration, management and control of resources in a data process system, **characterised in that** it comprises steps for the implementation of the decision-making process and its control by means of utility function (UF) and it comprises steps by which:
- necessary components and measuring mechanisms are defined in the technical module for the defining of components, step 1;
- control of results is applied in the technical module of control, step 2:
• it is controlled, if the selected specific components would be feasible in a real process;
o result of control: if yes, step 3 follows;
o result of control: if no, the next step follows;
• it is controlled, if it is possible to change components in an actual process;
o result of control: if yes, then a step is taken under which the definition of a component is changed, returning then to the step where it is controlled, if the selected specific components would be feasible in an actual process, followed by taking further steps intended under this step;
o result of control: if no, the step of ending the control of results is taken.
- technical module for the calculation of main coefficients is for processing the figures of main criteria for each component by means of mathematical data processing (UF), step 3;
- in the technical module for the calculation of partial utility coefficients, the figures of partial criteria are processed for each component by means of data processing (UF), step 4;
- in the technical module for the calculation of mean utility coefficients, the figures of mean utility coefficients are processed, step 5;
- result matrix is processed and decisions are made in the technical module for the processing of results (step 6);
- inclusion of a computer program product in customer's system.

8. Computer program product according to claims 1 to 7 for the application of respective system and method, **characterised in that** it comprises two modules: main module 6, which comprises control panel 6a and working panel 8, and technical module 7 of the resource database, in which the computer program product is applied to process calculations in the mathematical main module by means of calculations, wherein:
- activation of the calculation process through automatic input and application of main data, which are presented in the menu of the main module (6), where required data and elements are defined and identified;
- application for the purpose of inclusion of data contained in the working panel (8), where information and data are formed in the technical module of working panel resource (9a) wherein information and data are processed, operations are performed, application indicators and complex meters are applied in a complex way (KPI₁);
- application for the purpose of inclusion of data and elements of the technical module of resources for sending to the technical customer and process module (9b), where information and data are processed, operations are performed, application indicators and complex meters are applied in a complex way (KPI₁);
- application for the purpose of inclusion of data and elements of the technical customer module for sending to the technical module of management and control (9c), where operations are executed for the processing of information and data and formation of results at a stage, where application indicators and complex meters are applied in a complex way (KPI₁);
- application for the purpose of inclusion of data and elements of the technical module of management and control for sending to the technical module for generation and processing of activities (9d), where operations are executed for the processing and formation of information and data, for automatic activation of activities in a server computer, the results are modelled mathematically by means of the main model and information elements are formed, application and key performance indictors (KPI₁ and KPI₂) are calculated and applied as applicable;
- applied to send activities and information back to the control panel for correction and generation of main data and control of results;
- applied to send corrected and controlled main data and various statistical data displayed in real time to the technical information terminal (12) with the help of a statistical scale with coloured sectors.

9. Using the computer program product according to claim 8 to assign key performance and application indicators (KPI₁ and KPI₂) for automatic inclusion and application of algorithm program means.

10. Information technology device (5) for displaying information, **characterised in that** it comprises a display, battery, memory, speakers, USB cable and a universal system with programmable logic, and applications which give the possibility to charge the battery of the equipment with the USB cable connected to a computer, and to download information to the information terminal of the equipment, and to publish data in a digital format and in a technical form, using a peripheral technical device.
